# FASCICULE DE BREVET EUROPEEN

(11) **EP 2 159 154 B1**
(45) Date de publication et mention de la délivrance du brevet: **06.07.2011**
(21) Numéro de dépôt: 09010642.8
(22) Date de dépôt: 19.08.2009
(51) Int. Cl.: B64C 1/14, B60J 10/00, B60J 10/02

(54) **Encadrement étanche d'un hublot**
Abgedichteter Fensterrahmen
Sealed window frame

(30) Priorité: 27.08.2008 FR 0804723
(43) Date de publication de la demande: 03.03.2010
(73) Titulaire: EUROCOPTER, 13725 Marignane Cédex (FR)
(72) Inventeur: Mouton, Luc, 13510 Eguilles (FR)
(74) Mandataire: Pouillot, Laurent Pierre Paul

(56) Documents cités:
- EP-A- 0 249 560
- DE-A1- 19 518 658
- DE-C- 916 501
- FR-A- 1 388 582
- FR-A- 2 548 256
- FR-A- 2 766 156
- FR-A- 2 858 950
- US-A- 3 303 626

## Description

La présente invention concerne un encadrement étanche d'un hublot apte à solidariser ce hublot à une structure porteuse, ainsi que l'ensemble mécanique muni d'un tel encadrement.

Plus particulièrement, l'invention concerne l'encadrement d'un hublot d'aéronef de grande taille, à savoir une vitre ayant une dimension, sa longueur ou sa largeur, supérieure à 0,8 mètre notamment.

Le document EP 0175981 propose un encadrement, à savoir un châssis, pour fixer une fenêtre contre le cadre d'un véhicule automobile.

Selon ce document, le châssis comporte une rainure de réception pour accueillir la vitre et un élément d'adaptation pour être fixé au cadre du véhicule automobile.

Ainsi, le châssis et l'élément d'adaptation constituent un joint permettant de solidariser une vitre à un véhicule automobile.

Cependant, il est à noter que le domaine technique des hublots d'aéronef est éloigné du domaine technique des vitres de véhicule automobile. En effet, l'encadrement d'un hublot d'aéronef doit être d'une part à même de supporter des dilatations thermiques importantes et, d'autre part, suffisamment raide pour maintenir le hublot en position dans le cadre malgré les efforts aérodynamiques qu'il subit, tout en étant étanche.

Le joint décrit par le document EP 0175981 semble difficilement compatible avec une utilisation aéronautique.

II en va à priori de même pour le dispositif décrit dans le document FR 2548256, qui montre toutes les caractéristiques du préambule de la revendication 1, muni de deux éléments, à savoir une moulure et une parclose qui coopère pour former deux rainures.

Ainsi, les deux lèvres de la moulure définissent une rainure alors qu'une lèvre de cette moulure coopère avec une lèvre de la parclose pour former une deuxième rainure.

Le document DE 916501 présente un unique joint muni d'une première et d'une deuxième zones extrémales liées par une zone intermédiaire.

Le joint semble difficilement implémentable sur un aéronef du fait des contraintes aérodynamiques notamment.

Le document EP 0249560 décrit un profilé en forme de U qui chausse le chant d'une vitre et qui coopère avec un profilé de fermeture.

Le document FR 2858950 est relatif à un module d'étanchéité d'une vitre fixe, et donc à priori pas apte à être enlevée.

De même, les documents DE 19518158 et FR 1388582 présentent des dispositifs destinés à une application automobile.

Par ailleurs, les hublots de grande taille d'aéronef doivent être largables afin d'autoriser l'évacuation des passagers de l'aéronef en cas d'incidents. On note que cette fonction n'est malheureusement pas prévue par le document EP 0175981, et plus généralement pour les véhicules automobiles.

Le largage des hublots de grande taille libère alors des ouvertures dans le fuselage de l'aéronef, ces ouvertures étant particulièrement utiles si les accès classiques de l'aéronef sont bloqués.

On connaît par le document FR 2766156 un encadrement de hublot largable.

Cet encadrement comporte un joint comportant une âme à partir de laquelle s'étend un bord extérieur et un bord intérieur, le bord extérieur étant solidarisé à une structure porteuse du hublot alors que le bord intérieur enrobe le pourtour de ce hublot.

De plus, l'encadrement est muni d'un moyen de découpe de l'âme du joint pour séparer lesdits bords extérieur et intérieur et, par suite, le hublot de la structure porteuse.

Bien qu'efficace, ce dispositif semble limité pour les hublots de grandes tailles.

En effet, plus les hublots sont grands, plus le joint doit être à même d'autoriser un jeu important entre le hublot et la structure porteuse pour prendre en compte les dilatations différentielles de la structure porteuse et du hublot. De plus, le joint doit supporter les pressions différentielles entre l'extérieur et l'intérieur de l'aéronef.

Dès lors, il conviendrait de grossir exagérément le joint, au détriment de sa masse et de son aspect visuel.

Par ailleurs, un joint réalisé selon le document FR 2766156 sera dédié à un type donné de hublot. Par suite, chaque hublot nécessite la fabrication d'un joint spécifique ce qui génère au final des coûts de fabrication relativement importants.

Enfin, l'âme du joint étant découpée, l'encadrement n'est pas réutilisable.

La présente invention, telle que definie par les caractéristiques de la revendication 1, a alors pour objet de proposer un encadrement étanche apte à solidariser un hublot de grande taille à une structure porteuse d'aéronef, l'encadrement ayant des dimensions acceptables et pouvant être adapté à de multiples hublots à moindre coût.

Selon l'invention, un encadrement étanche d'un hublot apte à solidariser ce hublot à une structure porteuse, un hublot et une structure porteuse d'aéronef notamment, est remarquable en ce que, cet encadrement comportant un premier et un deuxième joints d'étanchéité distincts respectivement aptes à être agencés sur un premier pourtour périphérique du hublot et sur un deuxième pourtour périphérique de la structure porteuse, l'encadrement est de plus muni d'un moyen de maintien amovible, et rigide, pour enserrer les premier et deuxième joints ainsi que le hublot et la structure porteuse. Le moyen de maintien maintient alors le premier pourtour dans le premier joint et le deuxième pourtour dans le deuxième joint.

Par suite, le premier joint est agencé sur le premier pourtour périphérique du hublot, puis le deuxième joint est agencé sur le deuxième pourtour périphérique de la structure porteuse.

Les premier et deuxième joints peuvent provenir d'un joint originel, fabriqué linéairement à moindre coût puis coupé de manière adéquate.

Ensuite, le hublot est solidarisé à la structure porteuse à l'aide du moyen de maintien amovible. Le hublot étant maintenu en place par un moyen de maintien dédié à cet effet, il n'est plus obligatoire de mettre en oeuvre un unique joint surdimensionné.

Dès lors, contrairement aux solutions de l'art antérieur, l'invention met en oeuvre trois éléments distincts adaptés chacun à une fonction spécifique au lieu d'un unique joint devant assurer une fonction d'étanchéité et une fonction de transfert de charges aérodynamiques.

En effet, le premier joint, le deuxième joint et le moyen de maintien permettent respectivement d'assurer l'étanchéité au niveau du hublot, l'étanchéité au niveau de la structure porteuse et le transfert de charges.

En outre, les fonctions étant dissociées, il est aisé de créer un jeu entre le premier joint et le hublot et/ou le deuxième joint et la structure porteuse pour anticiper et autoriser la dilatation thermique du hublot et/ ou de la structure porteuse.

Enfin, le moyen de maintien étant amovible, il est possible de désolidariser le hublot afin de le larguer et d'autoriser ainsi la sortie des passagers d'un aéronef au travers de la structure porteuse par exemple.

Par ailleurs, l'invention comporte une ou plusieurs des caractéristiques additionnelles suivantes.

Par exemple, les premier et deuxième joints sont non seulement distincts mais indépendants l'un de l'autre, ces premier et deuxième joints ne collaborant pas ensemble pour remplir leur fonction, contrairement au document FR 2548256 notamment.

Avantageusement, le moyen de maintien comporte un premier et un deuxième moyens de serrage qui coopèrent de manière réversible l'un avec l'autre pour que le moyen de maintien enserre d'une part le premier joint et ledit hublot ainsi que, d'autre part, le deuxième joint et ladite structure porteuse.

Par exemple, durant une première phase, on commence par entourer le premier pourtour périphérique du hublot à l'aide du premier joint et le deuxième pourtour périphérique de la structure porteuse à l'aide du deuxième joint.

Ensuite, durant une deuxième phase, on emboite le premier moyen de serrage dans le deuxième moyen de serrage pour plaquer d'une part le premier joint contre le hublot et, d'autre part le deuxième joint contre la structure porteuse.

Les premier et deuxième moyens de serrage sont alors disposés de part et d'autre du sous-ensemble comportant la structure porteuse ainsi que le hublot, et, maintiennent en position le hublot au sein d'une ouverture de la structure porteuse. Par suite, si la structure porteuse est une structure d'aéronef, le premier moyen de serrage se trouve par exemple à l'intérieur de l'aéronef alors que le deuxième moyen de serrage est agencé à l'extérieur de cet aéronef.

Les extrémités libres du premier joint et du deuxième joint saillent avantageusement du moyen de maintien afin de garantir une bonne étanchéité.

En outre, pour optimiser les coûts de fabrication, les premier et deuxième moyens de serrage peuvent être appariés. Ils sont alors utilisables indifféremment à l'intérieur ou à l'extérieur de l'aéronef. Les premier et deuxième moyens de serrage sont alors agencés respectivement à l'intérieur et à l'extérieur de l'aéronef ou à l'extérieur et à l'intérieur de cet aéronef.

De même, si chaque moyen de serrage est muni d'un voile rigide et d'un moyen de fixation associé, à savoir un premier voile et un premier moyen de fixation pour le premier moyen de serrage ainsi qu'un deuxième voile et un deuxième moyen de fixation pour le deuxième moyen de serrage, le premier moyen de fixation coopère avec le deuxième moyen de fixation pour enserrer d'une part le premier joint et le hublot et d'autre part ledit deuxième joint et la structure porteuse.

Chaque moyen de fixation est alors éventuellement inséré dans le voile associé, le premier moyen de fixation étant inséré dans le premier voile alors que le deuxième moyen de fixation est inséré dans le deuxième voile.

Selon une première configuration, le moyen de fixation et le voile associé comporte respectivement un premier et un deuxième matériaux différents ce qui permet d'ajuster leur raideur relativement à leur fonction.

Cette caractéristique permet d'obtenir d'une part un voile suffisamment raide pour s'adapter au hublot et à la structure porteuse et, d'autre part, un moyen de fixation suffisamment résistant pour supporter les efforts subis par le hublot.

Chaque voile est alors raide en flexion afin de permettre le transfert des efforts subis par le hublot à la structure environnante, les efforts dus à la pression exercée sur le hublot par exemple. De son côté, la zone de fixation associée est rigide en cisaillement afin de sécuriser l'assemblage.

Au contraire, selon une deuxième configuration, chaque moyen de serrage est monobloc, le moyen de fixation et le voile associé d'un moyen de serrage étant obtenus à partir d'un seul et unique moulage et donc à partir d'un même matériau.

Néanmoins, afin d'optimiser les caractéristiques mécaniques, notamment la raideur, du moyen de fixation et du voile associé relativement à leur fonction, il est possible d'ajouter des fibres longues en des endroits spécifiques.

Ainsi, on va disposer lesdites fibres longues, de l'ordre de trois centimètres, au niveau du voile selon la largeur du voile et dans une direction sensiblement parallèle à la structure porteuse pour optimiser sa raideur en flexion. Par suite, le voile sera à même de transférer des efforts du hublot vers la structure porteuse.

Les fibres longues sont alors placées dans le moule aux endroits adéquats au moment du moulage.

On note qu'il est aussi possible d'insérer localement des fibres courtes en fonction du besoin.

Par ailleurs, chaque moyen de fixation ayant une section en forme de U de manière à présenter une base et deux branches latérales, la base du moyen de fixation est par exemple solidarisée au voile associé. Selon la première configuration, ladite base est par exemple collée au voile alors que, selon la deuxième configuration, cette base est intimement liée au voile lors du moulage du moyen de serrage.

De plus, afin que les premier et deuxième moyens de serrage puissent coopérer l'un avec l'autre, les branches des moyens de fixation sont optionnellement pourvues de moyens de retenue, les premiers moyens de retenue du premier moyen de fixation coopérant avec les deuxièmes moyens de retenue du deuxième moyen de fixation pour solidariser de manière réversible le premier moyen de serrage au deuxième moyen de serrage.

Chaque moyen de fixation définissant une gorge de retenue entre ses branches, une branche d'un moyen de fixation est engagée dans la gorge de retenue de l'autre moyen de fixation.

Du fait de la présence des moyens de retenue, une pluralité de crans par exemple, il devient quasiment impossible de désolidariser les premier et deuxième moyens de fixation, et par suite les premier et deuxième moyens de serrage, sans intervention extérieure.

Ainsi, les premier et deuxième moyens de fixation garantissent la solidarisation du hublot à la structure porteuse quelle que soit la pression exercée par l'air ambiant sur ce hublot.

Par ailleurs, les premier et deuxième joints, réalisés à partir d'un matériau faisant partie du groupe des élastomères, ont avantageusement une section en forme de U qui définit une gorge de réception, une première gorge de réception du premier joint recevant un premier pourtour périphérique dudit hublot et une deuxième gorge de réception du deuxième joint recevant un deuxième pourtour périphérique de la structure porteuse.

Ainsi, les premier et deuxième joints entourent respectivement les premier et deuxième pourtours périphériques du hublot et de la structure porteuse.

Avantageusement, afin d'anticiper la dilatation thermique du hublot, le premier pourtour périphérique du hublot pénètre partiellement dans la première gorge de réception du premier joint, en ne parcourant pas entièrement cette première gorge de réception. De même, pour anticiper la dilatation thermique de la structure porteuse, le deuxième pourtour périphérique de cette structure porteuse pénètre partiellement dans la deuxième gorge de réception du deuxième joint, en ne parcourant pas entièrement cette deuxième gorge de réception.

En outre, afin que le hublot puisse être largué, l'encadrement peut comporter un moyen de déconnexion du moyen de maintien, apte à désolidariser le premier moyen de serrage du deuxième moyen de serrage par exemple.

Le moyen de maintien comportant un premier et un deuxième moyens de serrage, le moyen de déconnexion peut être muni d'au moins un moyen de traction, tel qu'une sangle, une poignée ou un anneau, agencé sur le premier et/ou le deuxième moyen de serrage.

Par exemple, le premier moyen de serrage peut être muni d'une sangle, et le deuxième moyen de serrage d'un anneau.

Si besoin, pour favoriser la désolidarisation, le moyen de traction est lié à une zone de moindre tenue du premier et/ou du deuxième moyen de serrage associé.

Cette zone de moindre tenue facilite le démontage du hublot de manière réversible. La zone de moindre tenue n'étant pas une zone fusible, le démontage du hublot n'est pas destructif.

Il devient alors possible de réaliser des exercices d'évacuation sans dommage pour l'encadrement. L'encadrement devient donc réutilisable.

La présente invention a aussi pour objet l'ensemble mécanique équipé d'un encadrement étanche selon l'invention. Ainsi, ledit ensemble mécanique est muni d'un hublot et d'une structure porteuse apte à accueillir le hublot en son sein, cet ensemble mécanique comportant ledit encadrement étanche entre un premier pourtour périphérique du hublot et un deuxième pourtour périphérique de la structure porteuse.

Dès lors, le hublot peut être de grande taille en ayant une dimension supérieure à 0.8 mètres.

En outre, comme indiqué précédemment, il est avantageux que les premier et deuxième joints saillent du moyen de maintien.

De plus, le premier joint ayant une section en forme de U qui définit une première gorge de réception, le premier pourtour périphérique du hublot pénètre partiellement dans la première gorge de réception du premier joint.

De même, le deuxième joint ayant une section en forme de U qui définit une deuxième gorge de réception, le deuxième pourtour périphérique de la structure porteuse pénètre partiellement dans la deuxième gorge de réception du deuxième joint.

L'invention et ses avantages apparaîtront avec plus de détails dans le cadre de la description qui suit avec des exemples de réalisation donnés à titre illustratif en référence aux figures annexées qui représentent :
- la figure 1, une vue de côté d'un fuselage d'aéronef,
- la figure 2, une coupe d'un encadrement selon l'invention,
- la figure 3, une coupe d'un moyen de fixation,
- la figure 4, une coupe d'une première variante de l'invention, et
- la figure 5, une coupe d'une variante non-revendiquée de l'invention, et
- la figure 6, une vue présentant un moyen de serrage monobloc.

Les éléments présents dans plusieurs figures distinctes sont affectés d'une seule et même référence.

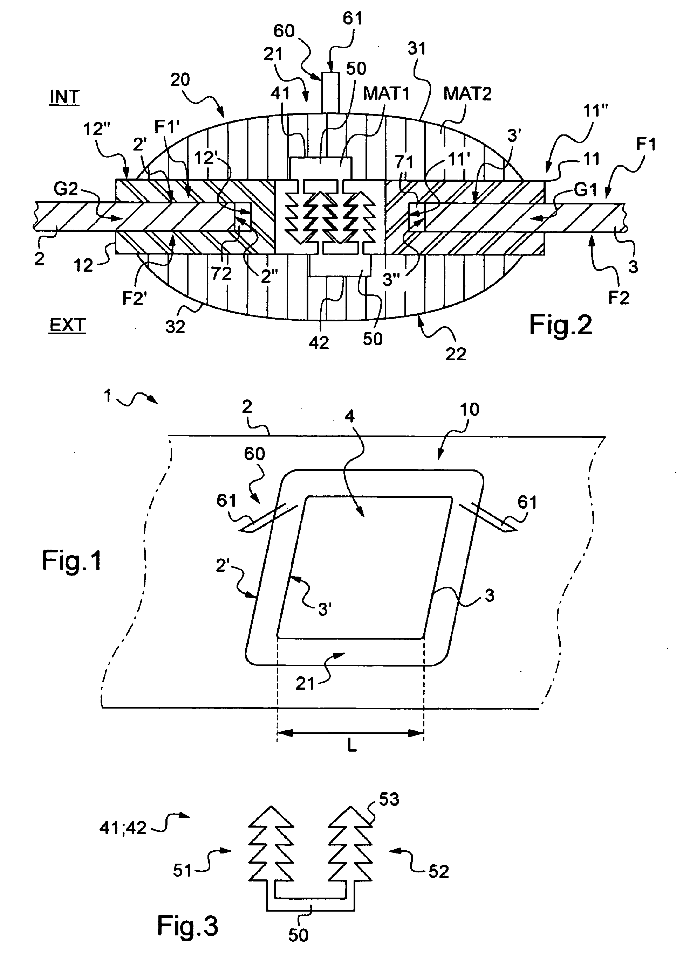

La figure 1 présente un ensemble mécanique 1 d'un fuselage d'aéronef, un giravion par exemple.

Cet ensemble mécanique 1 est pourvu d'une structure porteuse 2 dans laquelle est ménagée une ouverture 4.

Un hublot 3, une vitre d'une longueur L supérieure ou égale à 0,8 mètre, est alors agencé au sein de la structure porteuse 2, plus particulièrement dans son ouverture 4.

Par suite, l'ensemble mécanique est équipé d'un encadrement 10, un châssis, pour solidariser de manière étanche le hublot 3 à la structure porteuse 2.

Plus précisément, l'encadrement 10 lie mécaniquement, et de façon étanche, un premier pourtour périphérique 3' du hublot à un deuxième pourtour périphérique 2' de la structure porteuse 2, les premier et deuxième pourtours périphériques 3', 2' étant en regard l'un de l'autre lorsque le hublot 3 est disposé dans l'ouverture 4 de la structure porteuse 2.

En référence à la figure 2, l'encadrement 10 comporte un premier et un deuxième joints 11, 12 d'étanchéité distincts.

Le premier joint 11, en élastomère par exemple, a une section en forme de U qui définit une première gorge de réception G1.

Ce premier joint 11 peut provenir d'un joint originel produit linéairement puis découpé à la dimension adéquate.

Le premier joint 11 est alors agencé sur le premier pourtour périphérique 3' du hublot afin de recouvrir les faces interne F1 et externe F2 du hublot 3 au niveau de ce premier pourtour 3'. Par conséquent, le premier pourtour 3' est engagé dans la première gorge de réception G1 du premier joint 11.

On note que le premier pourtour 3' traverse partiellement la première gorge de réception et n'atteint donc pas le premier fond 11' de cette première gorge de réception G1.

Ainsi, la première tranche 3" du hublot est séparée du premier fond 11' de la première gorge de réception G1, et donc du premier joint 11, par un premier jeu 71. Ce premier jeu 71 permet alors au hublot 3 de se dilater thermiquement.

De même, le deuxième joint 12, en élastomère et provenant d'un joint originel produit linéairement puis découpé à la dimension adéquate par exemple, a une section en forme de U qui définit une deuxième gorge de réception G2.

Le deuxième joint 12 est alors agencé sur les faces interne F1' et externe F2' du deuxième pourtour périphérique 2' de la structure porteuse 2. Par suite, le deuxième pourtour 2' est engagé dans la deuxième gorge de réception G2 du deuxième joint 12.

Le deuxième pourtour 2' traverse ainsi partiellement la deuxième gorge de réception G2 et n'atteint pas son deuxième fond 12'. Ainsi, la deuxième tranche 2" de la structure porteuse 2 est séparée du deuxième fond 12' de la deuxième gorge de réception G2, et donc du deuxième joint 12, par un deuxième jeu 72 qui permet à cette structure porteuse de se dilater thermiquement.

Par ailleurs, l'encadrement 10 possède un moyen de maintien 20 amovible, et suffisamment raide pour maintenir les premier et deuxième joints 11, 12 en position et solidariser le hublot 3 à la structure porteuse 2. Le moyen de maintien 20 est conformé au hublot 3 et à la structure porteuse 2.

Ainsi, les efforts subis par le hublot 3 sont transmis à la structure porteuse 2 via le moyen de maintien 20.

Par suite, le moyen de maintien 20 enserre le premier joint 11 et le hublot 3 ainsi que le deuxième joint 12 et la structure porteuse 2.

On constate sur la figure 2 que, lorsque le moyen de maintien 20 plaque les premier et deuxième joints 11, 12 respectivement contre le hublot 3 et la structure porteuse 2, ces premier et deuxième joints 11, 12 saillent du moyen de maintien 20. Plus précisément, les extrémités libres 11", 12" saillent du moyen de maintien 20.

Avantageusement, le moyen de maintien 20 est muni d'un premier et deuxième moyens de serrages 21, 22 agencés de part et d'autre du sous-ensemble structure porteuse/ hublot/ premier et deuxième joints, les premier et deuxième moyens de serrage 21, 22 étant chacun disposés contre les premier et deuxième joints 11, 12.

Ainsi, le premier moyen de serrage 21 est agencé contre les premier et deuxième joints 11, 12 du côté de l'intérieur INT de l'aéronef, alors que le deuxième moyen de serrage 22 est agencé contre les premier et deuxième joints 11, 12 du côté de l'extérieur EXT de cet aéronef.

Les premier et deuxième moyens de serrage coopèrent alors l'un avec l'autre, en étant solidarisés l'un à l'autre de manière réversible pour enserrer le premier joint 11 et le hublot 3 ainsi que le deuxième joint 12 et la structure porteuse 2.

Par suite, chaque moyen de serrage comporte un voile rigide et un moyen de fixation à savoir un premier voile 31 et un premier moyen de fixation 41 pour le premier moyen de serrage 21 ainsi qu'un deuxième voile 32 et un deuxième moyen de fixation 42 pour le deuxième moyen de serrage 22.

Pour maintenir le hublot 3 dans l'ouverture 4 de la structure porteuse, le premier moyen de fixation 41 coopère avec le deuxième moyen de fixation 42 afin que les premier et deuxième voiles 31, 32 soient chacun plaqués contre les premier et deuxième joints 11, 12.

En référence à la figure 3, chaque moyen de fixation 41 a une section ayant une forme de U de manière à présenter deux branches latérales 51, 52 reliées par une base 50.

De plus, chaque branche latérale 51, 52 possède des moyens de retenue 53, des crans de fixation par exemple.

Selon une première configuration, conformément à la figure 2, la base 50 du premier moyen de fixation 41 est éventuellement fixée au premier voile 31 par des moyens usuels, par collage par exemple.

On note qu'il est avantageux de réaliser le premier moyen de fixation 41 et le premier voile 31 à partir de matériaux différents, à savoir respectivement un premier et un deuxième matériaux MAT1, MAT2.

En effet, il est alors possible de choisir les matériaux en prenant en considération la fonction des éléments du premier moyen de serrage. Plus précisément, on utilisera éventuellement un deuxième matériau, un matériau plastique muni de fibres longues par exemple, plus raide en flexion que le premier matériau.

De même, la base 50 du deuxième moyen de fixation 42 est fixée au deuxième voile 32 par des moyens usuels, par collage par exemple.

De plus, le deuxième moyen de fixation 42 et le deuxième voile 32 sont avantageusement réalisés respectivement en un premier et un deuxième matériaux MAT1, MAT2 différents, le deuxième matériau étant plus raide en flexion que le premier matériau.

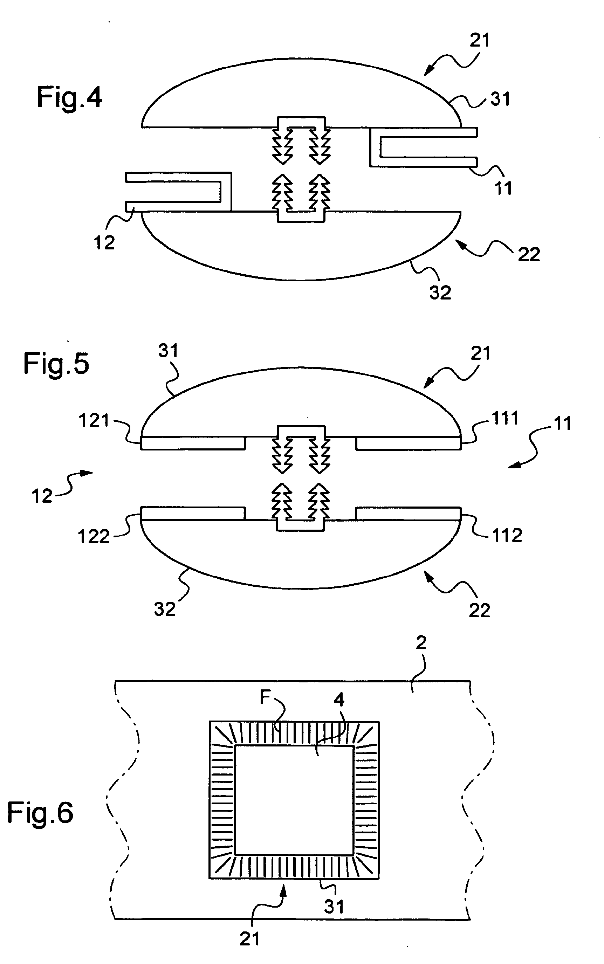

Selon la deuxième configuration illustrée sur la figure 6, chaque moyen de serrage est monobloc. Chaque moyen de serrage est alors issu d'un unique moule dans lequel sont insérées localement des fibres longues F orientées pour conférer au voile les caractéristiques mécaniques requises. A l'inverse, des fibres courtes peuvent être disposés dans le moule pour optimiser les caractéristiques du moyen de fixation.

Dès lors, chaque fibre longue F est sensiblement parallèle à la structure porteuse tout en étant dirigée selon la largeur du voile, la longueur du voile étant sa dimension la plus importante alors que son épaisseur représente sa dimension la plus faible.

Pour un hublot de forme circulaire, les fibres F sont donc dirigées selon une direction radiale du voile.

En référence à la figure 2, pour que les premier et deuxième moyens de serrage 21, 31 soient solidarisés de façon réversible l'un à l'autre, les moyens de retenue du premier moyen de fixation 41 coopèrent avec les moyens de retenue du deuxième moyen de fixation 42.

A cet effet, une branche du deuxième moyen de fixation 42 est agencée entre les deux branches du premier moyen de fixation 41, et une branche du premier moyen de fixation 41 est agencée entre les deux branches du deuxième moyen de fixation 42.

Les crans des moyens de retenue empêchent alors une désolidarisation indue des premier et deuxième moyens de serrage.

On note que les premier et deuxième moyens de serrage 21, 22 sont avantageusement appariés.

Eventuellement, pour pouvoir coopérer l'un avec l'autre, il convient de les décaler. Dès lors, en référence à la figure 2 et dans le plan de la feuille contenant cette figure, le deuxième moyen de serrage 22 n'est pas à l'aplomb du premier moyen de serrage 21.

Par ailleurs, l'encadrement 10 est avantageusement amovible afin que des passagers puissent sortir de l'aéronef, ou que des sauveteurs puissent y entrer, par l'ouverture 4 si nécessaire. Le hublot peut donc aussi servir d'issue de secours.

Ainsi, il convient de pouvoir enlever le moyen de maintien et donc de désolidariser le premier moyen de serrage 21 du deuxième moyen de serrage 22 en exerçant un effort de traction sur ce premier moyen de serrage 21 et/ ou sur le deuxième moyen de serrage 22.

Par conséquent, pour exercer facilement cet effort de traction, le moyen de maintien 20 comporte un moyen de déconnexion 60.

Le moyen de déconnexion 60 est alors pourvu d'au moins un moyen de traction 61, une sangle par exemple, fixé sur un moyen de serrage 21, 22 à l'intérieur INT et/ou à l'extérieur EXT de l'aéronef.

En référence à la figure 1, le moyen de traction comprend deux sangles solidarisées au premier moyen de serrage 21.

En saisissant ces moyens de traction, un passager peut désolidariser le premier moyen de serrage 21 du deuxième moyen de serrage 22. Le hublot 3 n'est donc plus maintenu et peut alors être enlevé.

On note que l'encadrement peut prévoir des moyens usuels, un couvercle amovible par exemple, pour protéger les moyens de traction contre toutes actions intempestives.

Pour faciliter la déconnexion, le moyen de traction est éventuellement relié à une zone de moindre tenue du moyen de maintien présentant des caractéristiques de retenue affaiblies entre les premier et deuxième moyens de serrage. Ainsi, le moyen de fixation d'un moyen de serrage ne comporte pas de moyens de retenue 53 au niveau de cette zone de moindre tenue par exemple.

Le démontage du hublot n'est alors pas destructif ce qui permet à l'encadrement 10 d'être réutilisable.

On note que, si l'encadrement n'est pas muni d'un moyen de déconnexion, un moyen de maintien 53 est solidarisé à un joint.

Par exemple, selon la première variante représentée sur la figure 4, le premier moyen de serrage 21 est solidarisé au premier joint 11, ce premier joint 11 étant collé au premier voile 31. De même, le deuxième moyen de serrage 22 est solidarisé au deuxième joint 12, ce deuxième joint 12 étant collé au deuxième voile 32.

Selon la deuxième variante représentée sur la figure 5 et non revendiquée, les premier et deuxième joints 11, 12 peuvent comporter chacun un joint interne 111, 121 et un joint externe 112, 122 solidarisés, éventuellement par collage, aux premier et deuxième moyens de serrage 21, 22.

Ainsi, un premier joint interne 111 du premier joint 11 et un deuxième joint interne 121 du deuxième joint 12 sont fixés au premier voile 31 du premier moyen de serrage 21. De même, un premier joint externe 112 du premier joint 11 et un deuxième joint externe 122 du deuxième joint 12 sont fixés au deuxième voile 32 du deuxième moyen de serrage 22.

Il n'en demeure pas moins que les premier et deuxième joints ainsi que le moyen de maintien forment trois organes différents, même si ces organes peuvent être liés.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Encadrement (10) étanche d'un hublot (3) apte à solidariser ledit hublot (3) à une structure porteuse (2), ledit encadrement (10) comportant un premier et un deuxième joints (11, 12) d'étanchéité distincts respectivement aptes à être agencés sur un premier pourtour (3') périphérique dudit hublot (3) et sur un deuxième pourtour (2') périphérique de ladite structure porteuse (2), ledit encadrement (10) étant muni d'un moyen de maintien (20) amovible distincts des premier et deuxième joints pour enserrer lesdits premier et deuxième joints (11, 12) ainsi que le hublot (3) et la structure porteuse (2), le moyen de maintien étant apte à maintenir le premier pourtour dans le premier joint et le deuxième pourtour dans le deuxième joint, ledit moyen de maintien (20) comportant un premier et une deuxième moyens de serrage (21, 22) qui coopèrent de manière réversible l'un avec l'autre pour enserrer d'une part ledit premier joint (11) et ledit hublot (3) ainsi que, d'autre part, ledit deuxième joint (12) et ladite structure porteuse (2)
**caractérisé en ce que** le premier moyen de serrage (21) est solidarisé au premier joint (11), ce premier joint (11) étant collé au premier voile (31), le deuxième moyen de serrage (22) étant solidarisé au deuxième joint (12), ce deuxième joint (12) étant collé au deuxième voile (32).

2. Encadrement selon la revendication 1,
**caractérisé en ce que** lesdits premier et deuxième moyens de serrage (21, 22) sont appariés.

3. Encadrement selon l'une quelconque des revendications 1 à 2,
**caractérisé en ce que** chaque moyen de serrage (21, 22) étant muni d'un voile rigide (31, 32) et d'un moyen de fixation associé (41, 42), à savoir un premier voile (31) et un premier moyen de fixation (41) pour le premier moyen de serrage (21) ainsi qu'un deuxième voile (32) et un deuxième moyen de fixation (42) pour le deuxième moyen de serrage (22), ledit premier moyen de fixation (41) coopère avec ledit deuxième moyen de fixation (42) pour que le moyen de maintien (20) enserre d'une part ledit premier joint (11) et ledit hublot (3) ainsi que, d'autre part, ledit deuxième joint (12) et ladite structure porteuse (2).

4. Encadrement selon la revendication 3,
**caractérisé en ce que** chaque moyen de serrage est monobloc.

5. Encadrement selon la revendication 3,
**caractérisé en ce que** chaque moyen de fixation (41, 42) est inséré dans ledit voile (31, 32) associé.

6. Encadrement selon la revendication 3,
**caractérisé en ce que** le moyen de fixation (41, 42) et le voile (31, 32) associé comportant respectivement un premier et un deuxième matériaux (MAT1, MAT2) différents.

7. Encadrement selon l'une quelconque des revendications 3 à 6,
**caractérisé en ce que** chaque moyen de fixation (41, 42) ayant une section en forme de U de manière à présenter une base (50) et deux branches latérales (51, 52), ladite base (50) du moyen de fixation (41, 42) est solidarisée au voile (31, 32) associé.

8. Encadrement selon la revendication 7,
**caractérisé en ce que** lesdites branches (51, 52) sont pourvues de moyens de retenue (53), les premiers moyens de retenue (53) du premier moyen de fixation (41) coopérant avec les deuxièmes moyens de retenue (53) du deuxième moyen de fixation (42) pour solidariser de manière réversible le premier moyen de serrage (21) au deuxième moyen de serrage (22).

9. Encadrement selon l'une quelconque des revendications précédentes,
**caractérisé en ce que** lesdits premier et deuxième joints (11, 12) ont une section en forme de U qui définit une gorge de réception (G1, G2), une première gorge de réception (G1) du premier joint (11) recevant un premier pourtour (3') périphérique dudit hublot (3) et une deuxième gorge de réception (G2) du deuxième joint (2) recevant un deuxième pourtour (2') périphérique de ladite structure porteuse (2).

10. Encadrement selon l'une quelconque des revendications précédentes,
**caractérisé en ce qu'**il comporte un moyen de déconnexion (60) du moyen de maintien (20).

11. Encadrement selon la revendication 10,
**caractérisé en ce que**, ledit moyen de maintien (20) comportant un premier et un deuxième moyens de serrage (21, 22), ledit moyen de déconnexion (60) est muni d'au moins un moyen de traction (61) agencé sur ledit premier et/ou ledit deuxième moyen de serrage (22).

12. Encadrement selon la revendication 11,
**caractérisé en ce que** ledit moyen de traction (61) est lié à une zone de moindre tenue dudit premier et/ou deuxième moyen de serrage (21, 22).

13. Ensemble mécanique (1) muni d'un hublot (3) et d'une structure porteuse (2) apte à accueillir ledit hublot (3), ledit ensemble mécanique (1) comportant un encadrement (10) étanche entre un premier pourtour (3') périphérique dudit hublot (3) et un deuxième pourtour (2') périphérique de la structure porteuse (2),
**caractérisé en ce que** ledit encadrement (10) est selon l'une quelconque des revendications précédentes.

14. Ensemble mécanique selon la revendication 13,
**caractérisé en ce que** lesdits premier et deuxième joints (11, 12) saillent du moyen de maintien (20).

15. Ensemble mécanique selon l'une quelconque des revendications 13 à 14,
**caractérisé en ce que**, ledit premier joint (11) ayant une section en forme de U qui définit une première gorge de réception (G1), le premier pourtour (3') périphérique du hublot (3) pénètre partiellement dans la première gorge de réception (G1) du premier joint (11).

16. Ensemble mécanique selon l'une quelconque des revendications 13 à 15,
**caractérisé en ce que**, ledit deuxième joint (12) ayant une section en forme de U qui définit une deuxième gorge de réception (G2), le deuxième pourtour (2') périphérique de la structure porteuse (2) pénètre partiellement dans la deuxième gorge de réception (G2) du deuxième joint (12).

## Claims

1. Sealed frame (10) for a window (3) suitable for securing said window (3) to a carrier structure (2), said frame (10) including distinct first and second sealing gaskets (11, 12) respectively suitable for being arranged on a first periphery (3') of said window (3) and on a second periphery (2') of said carrier structure (2), said frame (10) being provided with removable holder means (20) distinct from the first and second gaskets for clamping said first and second gaskets (11, 12) as well as the window (3) and the carrier structure (2), the holder means being suitable for holding the first periphery in the first gasket and the second periphery in the second gasket, said holder means (20) comprising first and second clamping means (21, 22) that co-operate mutually in reversible manner to clamp on the one hand said first gasket (11) and said window (3), as well as on the other hand said second gasket (12) and said carrier structure (2),
**characterised in that** the first clamping means (21) are secured to the first gasket (11), this first gasket (11) being adhesively bonded to the first web (31), the second clamping means (22) being secured to the second gasket (12), this second gasket (12) being adhesively bonded to the second web (32).

2. Frame according to Claim 1,
**characterised in that** said first and second clamping means (21, 22) are paired.

3. Frame according to either one of Claims 1 and 2, **characterised in that** each clamping means (21, 22) is provided with a rigid web (31, 32) and with associated fastener means (41, 42), i.e. a first web (31) and first fastener means (41) for the first clamping means (21), and a second web (32) and second fastener means (42) for the second clamping means (22), said first fastener means (41) co-operating with said second fastener means (42) so that the holder means (20) clamp on the one hand said first gasket (11) and said window (3) and on the other hand said second gasket (12) and said carrier structure (2).

4. Frame according to Claim 3,
**characterised in that** each of the clamping means comprises a single piece.

5. Frame according to Claim 3,
**characterised in that** each of the fastener means (41, 42) is inserted in said associated web (31, 32).

6. Frame according to Claim 3,
**characterised in that** the fastener means (41, 42) and the associated web (31, 32) comprise respectively first and second materials (MAT1, MAT2) that are different.

7. Frame according to any one of Claims 3 to 6,
**characterised in that** each of the fastener means (41, 42) has a U-shaped section so as to present a base (50) and two side branches (51, 52), said base (50) of the fastener means (41, 42) being secured to the associated web (31, 32).

8. Frame according to Claim 7,
**characterised in that** said branches (51, 52) are provided with retaining means (53), the first retaining means (53) of the first fastener means (41) co-operating with the second retaining means (53) of the second fastener means (42) to secure the first clamping means (21) reversibly to the second clamping means (22).

9. Frame according to any one of the preceding claims,
**characterised in that** said first and second gaskets (11, 12) are of channel-section defining a receiver groove (G1, G2), a first receiver groove (G1) of the first gasket (11) receiving a first periphery (3') of said window (3) and a second receiver groove (G2) of the second gasket (2) receiving a second periphery (2') of said carrier structure (2).

10. Frame according to any one of the preceding claims,
**characterised in that** it includes disconnection means (60) for disconnecting the holder means (20).

11. Frame according to Claim 10,
**characterised in that** said holder means (20) include first and second clamping means (21, 22), said disconnection means (60) being provided with at least one traction means (61) arranged on said first and/or second clamping means (22).

12. Frame according to Claim 11,
**characterised in that** said traction means (61) are connected to a zone of weakness of said first and/or second clamping means (21, 22).

13. Mechanical assembly (1) provided with a window (3) and a carrier structure (2) suitable for receiving said window (3), said mechanical assembly (1) comprising a sealed frame (10) between a first periphery (3') of said window (3) and a second periphery (2') of the carrier structure (2),
**characterised in that** said frame (10) is according to any one of the preceding claims.

14. Mechanical assembly according to Claim 13,
**characterised in that** said first and second gaskets (11, 12) project from the holder means (20).

15. Mechanical assembly according to either one of Claims 13 and 14,
**characterised in that** said first gasket (11) has a channel-section defining a first receiver groove (G1), the first periphery (3') of the window (3) penetrating part of the way into the first receiver groove (G1) of the first gasket (11).

16. Mechanical assembly according to any one of Claims 13 to 15,
**characterised in that** said second gasket (12) has a channel-section defining a second receiver groove (G2), the second periphery (2') of the carrier structure (2) penetrating part of the way into the second receiver groove (G2) of the second gasket (12).

## Patentansprüche

1. Abgedichteter Rahmen (10) eines Fensters (3), mit dem das Fenster (3) an einem Trägeraufbau (2) befestigt werden kann, wobei der Rahmen (10) eine erste und eine zweite Dichtung (11, 12) aufweist, die voneinander getrennt sind und jeweils auf einem ersten Umfang (3') des Randes des Fensters (3) und auf einem zweiten Umfang (2') des Randes des Trägeraufbaus (2) angebracht werden können, wobei der Rahmen (10) mit einem Haltemittel (20) versehen ist, welches abnehmbar und getrennt von den ersten und zweiten Dichtungen ist, um die erste und die zweite Dichtung (11, 12) sowie das Fenster (3) und den Trägeraufbau (2) zu klemmen, wobei das Haltemittel geeignet ist den ersten Rand in der ersten Dichtung und den zweiten Rand in der zweiten Dichtung zu halten, wobei das Haltemittel (20) ein erstes und ein zweites Klemmmittel (21, 22) aufweist, welche miteinander reversibel zusammenwirken, um einerseits die erste Dichtung (11) und das Fenster (3) sowie andererseits die zweite Dichtung (12) und den Trägeraufbau (2) einzuspannen, **dadurch gekennzeichnet, dass** das erste Klemmmittel (21) mit der ersten Dichtung (11) fest verbunden ist, wobei die erste Dichtung (11) an der ersten Schale (31) angeklebt ist und das zweite Klemmmittel (22) mit der zweiten Dichtung (12) fest verbunden ist und diese zweite Dichtung (12) an die zweite Schale (32) angeklebt ist.

2. Rahmen nach Anspruch 1, **dadurch gekennzeichnet, dass** die ersten und zweiten Klemmmittel (21, 22) paarweise zusammengestellt sind.

3. Rahmen nach einem der Ansprüche 1 oder 2, **dadurch gekennzeichnet, dass** jedes Klemmmittel (21, 22) mit einer steifen Schale (31, 32) und einem zugehörigen Befestigungsmittel (41, 42) versehen sind, einer ersten Schale (31) und einem ersten Befestigungsmittel (41) für das erste Klemmmittel (21) sowie einer zweiten Schale (32) und einem zweiten Befestigungsmittel (42) für das zweite Klemmmittel (22), wobei das erste Befestigungsmittel (41) mit dem zweiten Befestigungsmittel (42) zusammenwirkt, damit das Haltemittel (20) einerseits die erste Dichtung (11) und das Fenster (3) sowie andererseits die zweite Dichtung (12) und den Trägeraufbau (2) klemmt.

4. Rahmen nach Anspruch 3, **dadurch gekennzeichnet, dass** jedes Klemmmittel einstückig ist.

5. Rahmen nach Anspruch 3, **dadurch gekennzeichnet, dass** jedes Befestigungsmittel (41, 42) in die zugehörige Schale (31, 32) eingefügt ist.

6. Rahmen nach Anspruch 3, **dadurch gekennzeichnet, dass** das Befestigungsmittel (41, 42) und die zugehörige Schale (31, 32) jeweils ein erstes und ein zweites unterschiedliches Material (MAT1, MAT2) aufweisen.

7. Rahmen nach einem der Ansprüche 3 bis 6, **dadurch gekennzeichnet, dass** jedes Befestigungsmittel (41, 42) ein U-förmiges Profil aufweist, der Art, dass es eine Basis (50) und zwei Seitenarme (51, 52) aufweist, wobei die Basis (50) des Befestigungsmittels (41, 42) mit der zugehörigen Schale (31, 32) fest verbunden ist.

8. Rahmen nach Anspruch 7, **dadurch gekennzeichnet, dass** die Arme (51, 52) mit Rückhaltemitteln (53) versehen sind, wobei die ersten Rückhaltemittel (53) des ersten Befestigungsmittels (41) mit dem zweiten Rückhaltemitteln (53) des zweiten Befestigungsmittels (42) zusammenwirken, um reversibel das erste Klemmmittel (21) mit dem zweiten Klemmmittel (22) fest zu verbinden.

9. Rahmen nach einem der vorstehenden Ansprüche, **dadurch gekennzeichnet, dass** die ersten und zweiten Dichtungen (11, 12) einen U-formigen Querschnitt aufweisen, der eine Aufnahmenut (G1, G2) bildet, wobei eine erste Aufnahmenut (G1) der ersten Dichtung (11) einen ersten Umfangsrand (3') des Fensters (3) aufnimmt und die zweite Aufnahmenut (G2) der zweiten Dichtung (12) einen zweiten Umfangsrand (2') des Trägeraufbaus (2) aufnimmt.

10. Rahmen nach einem der vorstehenden Anspruche, **dadurch gekennzeichnet, dass** er ein Mittel zum Lösen (60) des Haltemittels (20) aufweist.

11. Rahmen nach Anspruch 10, **dadurch gekennzeichnet, dass** das Haltemittel (20) ein erstes und ein zweites Klemmmittel (21, 22) aufweist, wobei das Mittel zum Lösen (60) mit mindestens einem Zugmittel (61) versehen ist, welches auf dem ersten und/oder dem zweiten Klemmmittel (22) angeordnet ist.

12. Rahmen nach Anspruch 11, **dadurch gekennzeichnet, dass** das Zugmittel (61) mit einem Bereich geringerer Festigkeit des ersten und/oder des zweiten Klemmmittels (21, 22) verbunden ist.

13. Mechanische Einheit (1) mit einem Fenster (3) und einem tragenden Aufbau (2) zur Aufnahme des Fensters (3), wobei die mechanische Einheit (1) einen abgedichteten Rahmen (10) zwischen einem ersten Rahmenumfang (3') des Fensters (3) und einem zweiten Rahmenumfang (2') des tragenden Aufbaus (2) aufweist, **dadurch gekennzeichnet, dass** der Rahmen (10) ein Rahmen nach einem der vorstehenden Ansprüche ist.

14. Mechanische Einheit nach Anspruch 13, **dadurch gekennzeichnet, dass** die ersten und zweiten Dichtungen (11, 12) gegenüber dem Haltemittel (20) vorstehen.

15. Mechanische Einheit nach einem der Ansprüche 13 oder 14, **dadurch gekennzeichnet, dass** die erste Dichtung (11) einen U-förmigen Querschnitt aufweist, der eine erste Aufnahmenut (G1) bildet, wobei der erste Umfangsrand (3') des Fensters (3) teilweise in die erste Aufnahmenut (G1) der ersten Dichtung (11) eindringt.

16. Mechanische Einheit nach einem der Ansprüche 13 bis 15, **dadurch gekennzeichnet, dass** die zweite Dichtung (12) einen U-förmigen Querschnitt aufweist, der eine zweite Aufnahmenut (G2) definiert, wobei der zweite Umfangsrand (2') des tragenden Aufbaus (2) teilweise in die zweite Aufnahmenut (G2) der zweiten Dichtung (12) eindringt.
